# EUROPEAN PATENT APPLICATION

(11) **EP 3 603 382 A1**
(43) Date of publication of application: **05.02.2020**
(21) Application number: 18196084.0
(22) Date of filing: 21.09.2018
(51) Int. Cl.: A01G 17/10, B60P 7/08, B65D 63/16

(54) **SUPPORTING STRUCTURE FOR FRUIT TREE BRANCH**

(30) Priority: 03.08.2018 KR 20180090906
(71) Applicant: Dain Industry Inc., Yecheon-gun, Gyeongsangbuk-do 36815 (KR)
(72) Inventor: CHOI, Jong Gweon, 36847 Gyeongsangbuk-do (KR)
(74) Representative: J A Kemp LLP

(57) **Abstract**

Provided is a supporting structure for a fruit tree branch for supporting a side branch of a fruit tree by using a supporting strap having a predetermined width or greater. Even when load due to the side branch increases by providing a plurality of inserters into which the supporting strap is inserted and combined with a length adjusting member multiple times, the supporting strap may be prevented from easily slipping or escaping from the length adjusting member, thereby fixing the side branch to a wanted position.

## Description

This application claims the benefit of Korean Patent Application No. 10-2018-0090906, filed on August 3, 2018, in the Korean Intellectual Property Office, the disclosure of which is incorporated herein in its entirety by reference.

One or more embodiments relate to a supporting structure for a fruit tree branch, and more particularly, to a supporting structure for a fruit tree branch capable of supporting bending of side branches among branches of a fruit tree at a certain angle as well as adjusting the length of a supporting strap so as to easily adjust positions of side branches.

Generally, in order to ensure that fruit grows well in fruit trees with fruit such as apples and pears, it is necessary to pull side branches branched off from a main branch of fruit trees up or down and support them such that sufficient nutrients are supplied to fruit in accordance with the time when fruit grows.

In other words, nutrients are not shifted to one side but moved evenly from the inside to the outside of the side branches, only when the side branches extending from the fruit tree are maintained at an angle of 10 to 15 degrees.
Side branches are divided into vegetative growth (water sprout) and reproductive growth (bearing branch) according to the angle of the side branch, which greatly affects yield and fruit enlargement in the following year.

At this time, when a side branch is left facing toward the sky, only a turion (water sprout) is formed, and the yield is reduced in the following year. When a side branch is turned toward the ground, too many fruit-bearing branches are formed. Therefore, there is lack of reserve nutrients due to unnecessary flower bud differentiation, which leads to a reduction fruit size, and thus, the provision of support for side branches is indispensable for the physiological stabilization of fruits and trees in a wanted state.

Here, in order to support a side branch of a fruit tree, one end of a supporting strap formed of synthetic resin or the like is bound to the side branch, and the other end is bound to a main branch (a side branch of another tree, an auxiliary wire connecting a main branch to another main branch, or another article functioning as a main branch). However, in the above method, the process of binding the supporting strap to the side branch is complicated, and when the side branch is higher than the height of a worker or space is narrow due to many side branches, work is difficult, workability is remarkably reduced, and labor costs increase.

In addition, a slender small cross-sectional area of the above supporting strap applies pressure to suppress or even cut a passage through which nutrients and moisture flow between the epidermis and the xylem of the side branch, and inhibits the flow of the sap, which causes a problem in that sufficient nutrients and moisture are not supplied.

Further, when the supporting strap is withdrawn, not only can the knot not be smoothly untied, but also the supporting strap cannot be reused. The supporting strap must be cut according to the supporting angle of the side branch, which causes problems in that a material (the supporting strap) is heavily wasted and readjustment of the supporting angle of the side branch is difficult.

To overcome the above problems, the related art (Korean Patent No. 10-1832703) discloses a technique relating to a supporting structure for a fruit tree branch including a supporting strap.

The related art discloses a supporting structure for a fruit tree branch capable of easily supporting side branches of a fruit tree by hooking a branch hooking member bound to one side of a supporting strap to a side branch of the fruit tree to be moved, winding the supporting strap around a main branch of the fruit tree, and then combining a length adjusting member to the other side of the supporting strap.

However, according to the related art, when the load of the side branch increases, the supporting strap combined with the length adjustment member may easily slip or fall away from the length adjustment member, which causes a change in the position of the side branch. Additionally, a bending angle of the side branch changes and the position of the side branch may not be easily adjusted.

According to one or more embodiments, a supporting structure for a fruit tree branch includes a branch hooking member detachably supported on a side branch to be supported among branches of a fruit tree; a supporting strap having one end fixed to the branch hooking member, wound around a main branch among the branches of the fruit tree, and having a predetermined width; and a length adjusting member having one end fixed to another end of the supporting strap and combined with the supporting strap, and movable along a longitudinal direction of the supporting strap, wherein the length adjusting member comprises: a body having a plate-like form and extending along a direction; a first receiver provided in the body and configured to receive a portion of the supporting strap; a second receiver provided in the body, spaced apart from the first receiver by a predetermined distance, and configured to receive another portion of the supporting strap; a first inserter extending along a first direction, through which the portion of the supporting strap is inserted into the first receiver; and a second inserter extending along a second direction different from the first direction, through which the other portion of the supporting strap to be inserted into the second receiver..

According to one or more embodiments, a supporting structure for a fruit tree branch includes a branch hooking member detachably supported on a side branch to be supported among branches of a fruit tree; a supporting strap having one end fixed to the branch hooking member, wound around a main branch among the branches of the fruit tree, and having a predetermined width; and a length adjusting member having one end fixed to another end of the supporting strap and combined with the supporting strap, and movable along a longitudinal direction of the supporting strap, wherein the length adjusting member comprises: a body having a plate-like form and extending along a direction; three or more receivers spaced apart from each other at a center of the body and configured to receive different portions of the supporting strap; and three or more inserters extending along a direction, wherein the different portions of the supporting strap are respectively inserted into the three or more inserters..

These and/or other aspects will become apparent and more readily appreciated from the following description of the embodiments, taken in conjunction with the accompanying drawings in which:
FIG. 1 is a view illustrating a state of use of a supporting structure for a fruit tree branch, according to an embodiment;
FIG. 2 is a perspective view of the supporting structure for a fruit tree branch, according to an embodiment;
FIG. 3 is a side view of a branch hooking member according to an embodiment;
FIG. 4 is a plan view of a length adjusting member according to an embodiment;
FIG. 5 is a side view of the length adjusting member according to an embodiment;
FIG. 6 is a view illustrating a state of use of the supporting structure for a fruit tree branch, according to an embodiment;
FIGS. 7A to 7C are schematic views for explaining a method of installing the supporting structure for a fruit tree branch, according to an embodiment;
FIG. 8 is a side view for explaining a state of use of the length adjusting member, according to an embodiment;
FIG. 9 is a perspective view of a supporting structure for a fruit tree branch, according to another embodiment;
FIG. 10 is a plan view of a length adjusting member according to another embodiment; and
FIG. 11 is a schematic view for explaining a state of use of the length adjusting member, according to another embodiment.

Hereinafter, the present disclosure will be described in detail by explaining exemplary embodiments of the disclosure with reference to the attached drawings. Like reference numerals in the drawings denote like components, and thus their description will be omitted.

As the disclosure allows for various changes and numerous embodiments, particular embodiments will be illustrated in the drawings and described in detail in the written description. The attached drawings for illustrating exemplary embodiments are referred to in order to gain a sufficient understanding of the effects and features thereof, and methods for accomplishing the effects and features thereof. However, this is not intended to limit the disclosure to particular modes of practice, and it is to be appreciated that all changes, equivalents, and substitutes that do not depart from the spirit and technical scope are encompassed in the disclosure.

It will be understood that although the terms "first", "second", etc. may be used herein to describe various components, these components should not be limited by these terms. These components are only used to distinguish one component from another.

As used herein, the singular forms "a", "an", and "the" are intended to include the plural forms as well, unless the context clearly indicates otherwise.

As used herein, top (upper), bottom (lower), left and right (side), front, rear, etc. indicating the directions are set on the basis of the relative positions between the drawings and the configurations for convenience of explanation not on the purpose of limitation of rights. Each direction described below is based on this, except that the directions are specifically limited otherwise.

It will be further understood that the terms "comprises" and/or "comprising" used herein specify the presence of stated features or components, but do not preclude the presence or addition of one or more other features or components.

Sizes of components in the drawings may be exaggerated for convenience of explanation. In other words, since sizes and thicknesses of components in the drawings are arbitrarily illustrated for convenience of explanation, the following embodiments are not limited thereto.

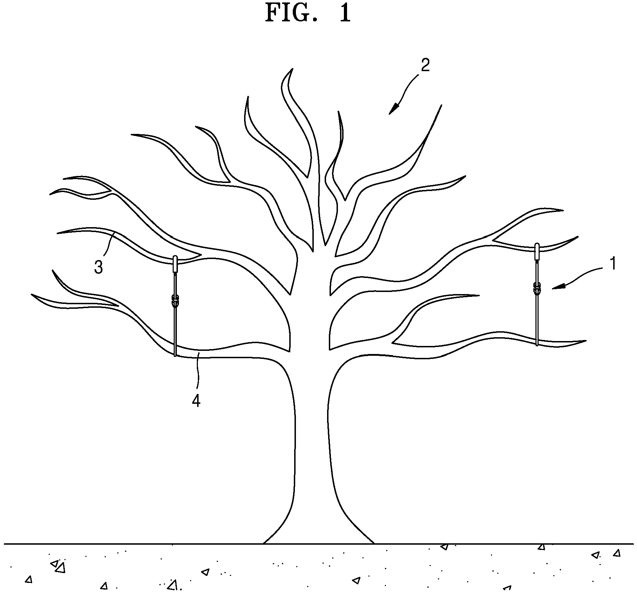

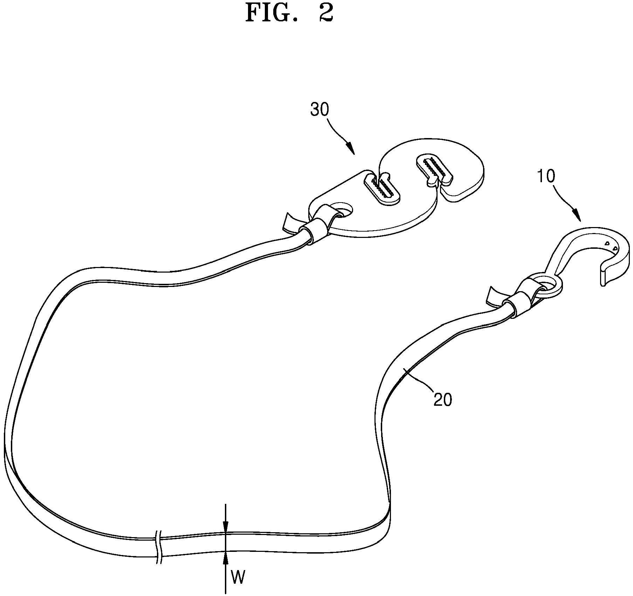

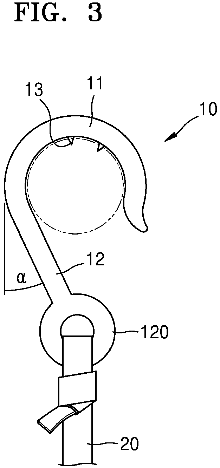

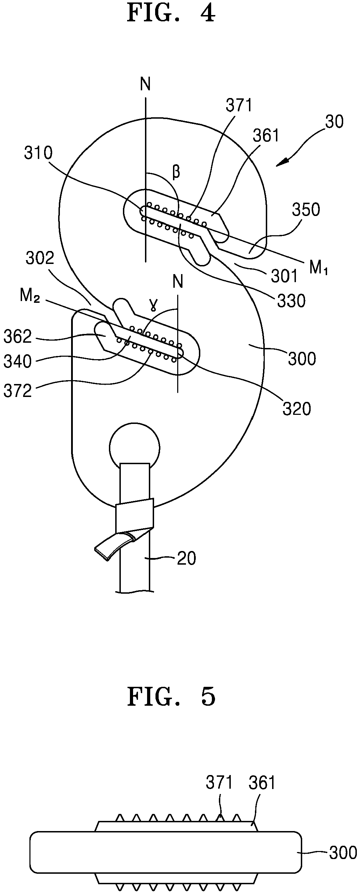

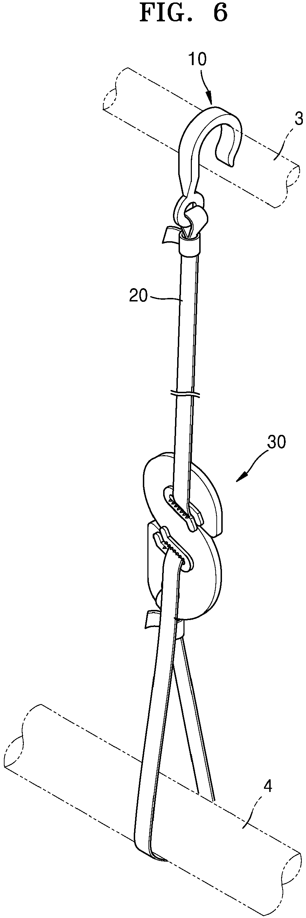

FIG. 1 is a view illustrating a use state of a supporting structure 1 for a fruit tree branch according to an embodiment. FIG. 2 is a perspective view of the supporting structure 1 for the fruit tree branch according to an embodiment. FIG. 3 is a side view of a branch hooking member 10 according to an embodiment. FIG. 4 is a plan view of a length adjusting member 30 according to an embodiment. FIG. 5 is a side view of the length adjusting member 30 according to an embodiment. FIG. 6 is a view illustrating a use state of use of the supporting structure 1 for the fruit tree branch according to an embodiment.

Referring to FIGS. 1 to 6, the supporting structure 1 for the fruit tree branch according to an embodiment is a supporting member disposed between a side branch 3 and a main branch 4 included in a fruit tree 2 and maintaining a bent angle and a position of the side branch 3 with respect to the main branch 4. For example, the supporting structure 1 for the fruit tree branch may include the branch hooking member 10 detachably supported on the side branch 3 to be supported among branches of the fruit tree 2, a supporting strap 20 wound around the main branch 4 among the branches of the fruit tree 2, and the length adjusting member 30 combined with the supporting strap 20 and capable of adjusting the length of the supporting strap 20 disposed between the side branch 3 and the main branch 4.

The branch hooking member 10 may include a hook 11 detachably supported on the side branch 3 and a supporting strap support 12 to which one end of the supporting strap 20 to be described later is fixed. The hook 11 may be provided in the shape of a hook capable of being hooked to a branch of the fruit tree 2, for example, the side branch 3. However, the present disclosure is not limited thereto, and the hook 11 may be provided in any shape that may be hooked on the branch of the fruit tree 2.

The supporting strap support 12 is a connecting member disposed between the hook 11 and the supporting strap 20 and capable of connecting the hook 11 and the supporting strap 20 to each other. As an example, one end of the supporting strap 20 may be fixed to the supporting strap support 12. For example, the supporting strap support 12 may include a hooking groove 120 in the shape of an opening, and one end of the supporting strap 20 may be fixedly coupled to the hooking groove 120. At this time, the hooking groove 120 may be relatively thinner than the remaining region of the supporting strap support 12 such that the hooking of the supporting strap 20 is facilitated. In the present disclosure, one end of the supporting strap 20 is fixed using the hooking groove 120, but the present disclosure is not limited thereto. Any fixing member capable of fixing one end of the supporting strap 20 may be disposed.

Also, the supporting strap support 12 may be combined to have a predetermined angle α with respect to the hook 11. As an example, the supporting strap support 12 may be provided to extend along a direction, and one end of the supporting strap support 12 may be arranged to be combined with one end of the hook 11. At this time, the supporting strap support 12 may be combined with the hook 11 to have the predetermined angle α and thus, the branch hooking member 10 may be subjected to a tensile force along a vertical direction.

One or more fixing protrusions 13 may be disposed on the inner side surface of the hook 11 arranged to face the side branch 3 of the fruit tree 2 to fix the hook 11 to the side branch 3. As an example, the one or more fixing protrusions 13 may be provided in a wedge shape which may be fixed in contact with the side branch 3, but the present disclosure is not limited thereto.

One end of the supporting strap 20 may be fixed to the branch hooking member 10 and may be wound on the main branch 4 among the branches of the fruit tree 2, thereby applying the compressive force to the side branch 3 and the main branch 4. As an example, the supporting strap 20 may be provided in the shape of a rope extending along a direction. Further, the supporting strap 20 may be provided to have a predetermined width W, for example, the width W of 5 mm or more. Accordingly, the supporting strap 20 may be in contact with the main branch 4 in a relatively large area in a state where the supporting strap 20 is wound on the main branch 4, and accordingly, unlike a supporting strap having a small width and in the shape of a rope according to the related art that penetrates into the main branch 4 and damages the main branch 4, the supporting strap 20 may be stably wound around the main branch 4 without damaging the main branch 4.

The length adjusting member 30 may have one end fixed to the other end of the supporting strap 20 and may be combined with the supporting strap 20 along a longitudinal direction of the supporting strap 20 to adjust the length of the supporting strap 20 disposed between the side branch 3 supported on the branch hooking member 10 and the main branch 4 wound around the supporting strap 20.

As an example, the length adjusting member 30 may include a body 300 in the shape of a plate, a first receiver 310 and a second receiver 320 in which the supporting strap 20 is received, and a first inserter 330 and a second inserter 340 corresponding to a path into which the supporting strap 20 is inserted. The body 300 may be provided in the shape of the plate extending along a direction, but the present disclosure is not limited thereto. The body 300 may be provided in any shape such that the first receiver 310 and the second receiver 320 and the first inserter 330 and the second inserter 340 that will be described later may be arranged.

The first receiver 310 may be disposed in the body 300, and a part of the supporting strap 20 may be received therein. As an example, when the supporting strap 20 is provided to have a predetermined width, the first receiver 310 may be disposed at the center of the body 300 and may be provided in the shape of a groove extending along a direction so as to receive the supporting strap 20. At this time, the groove shape of the first receiver 310 may correspond to the width of the supporting strap 20.

The second receiver 320 may be disposed in the body 300 and spaced apart from the first receiver 310 by a predetermined distance such that a part of the second receiver 320 different from the part of the supporting strap 20 received in the first receiver 310 may be received. As an example, the second receiver 320 may be disposed at the center of the body 300 and spaced apart from the first receiver 310 by a predetermined distance along a direction in which the body 300 extends. Also, when the supporting strap 20 is provided to have a predetermined width, the second receiver 320 may be formed in the shape of a groove extending along a direction so as to receive the supporting strap. At this time, the groove shape of the second receiver 320 may correspond to the width of the supporting strap 20.

The first inserter 330 is an insertion path from a first opening 301 disposed on the side of the body 300 to the first receiver 310 such that a part of the supporting strap 20 may be inserted into the first receiver 310. As an example, the first inserter 330 may be a guide path extending from the first opening 301 to the first receiver 310 along a first direction M₁. At this time, the first direction M₁ may have a predetermined angle β with an extension direction N of the body 300, e.g. an angle of 100 degrees or more and 150 degrees or less along a clockwise direction. Accordingly, a user may insert the supporting strap 20 having the predetermined width into the first inserter 330 more easily.

The second inserter 340 is an insertion path from a second opening 302 disposed on the side of the body 300 to the second receiver 320 such that another part of the supporting strap 20 may be inserted into the second receiver 320. As an example, the second inserter 340 may be a guide path extending from the second opening 302 to the second receiver 320 along a second direction M₂. At this time, the second direction M₂ may have a predetermined angle γ with the extension direction N of the body 300, e.g. an angle of 30 degrees or more and 80 degrees or less along a counterclockwise direction. Accordingly, the user may insert the supporting strap 20 having the predetermined width into the first inserter 330 and then the second inserter 340.

Although the first receiver 310 and the first inserter 330 and the second receiver 320 and the second inserter 340 are described separately in the above embodiment, one groove shape extending along a direction may simultaneously perform functions of an inserter and a receiver such that the supporting strap 20 having the predetermined width may be inserted and received.

A stepper 350 is an escape preventing member disposed at one end of the first inserter 330 to prevent a part of the supporting strap 20 from being escaped from the first inserter 330. The stepper 350 may be disposed at one end of the first inserter 330 adjacent to the first opening 301 such that the width of the first inserter 330 in which the stepper 350 is disposed may be narrowed. Accordingly, the supporting strap 20 may not be escaped from the first inserter 330 without additional external force applied by the user.

The first protrusion 361 is a fixing member applying pressure to a part of the supporting strap 20 received in the first receiver 310 to fix the position of the supporting strap 20. For example, the first protrusion 361 may be disposed along the longitudinal direction of the first receiver 310 and protrude along a thickness direction of the body 300. The first protrusion 361 may apply pressure to a bent part of the supporting strap 20 received in the first receiver 310.

The second protrusion 362 is a fixing member applying pressure to another part of the supporting strap 20 received in the second receiver 320 to fix the position of the supporting strap 20. The second protrusion 362 may be disposed along the longitudinal direction of the second receiver 320 and protrude along the thickness direction of the body 300. The second protrusion 362 may apply pressure to the bent part of the supporting strap 20 received in the second receiver 320.

A first engager 371 is a fixing member fixing the position of the supporting strap 20 received in the first receiver 310 by applying frictional force to the supporting strap 20 having the predetermined width. As an example, the first engager 371 may be disposed along the longitudinal direction of the first protrusion 361 at an upper portion of the first protrusion 361 and may protrude along the thickness direction of the body 300. At this time, the first engager 371 may be provided in the shape of one or more saw-tooth such that the first engager 371 may come into contact with one surface of the supporting strap 20 in a state where the supporting strap 20 is bent. Accordingly, the frictional force may be generated between the supporting strap 20 and the first engager 371.

The second engager 372 is a fixing member fixing the position of the supporting strap 20 received in the second receiver 320 by applying frictional force to the supporting strap 20 having the predetermined width. As an example, the second engager 372 may be disposed along the longitudinal direction of the second protrusion 362 at an upper portion of the second protrusion 362 and may protrude along the thickness direction of the body 300. At this time, the second engager 372 may be provided in the shape of one or more saw-tooth such that the first engager 371 may come into contact with one surface of the supporting strap 20 in the state where the supporting strap 20 is bent. Accordingly, the frictional force may be generated between the supporting strap 20 and the second engager 372.

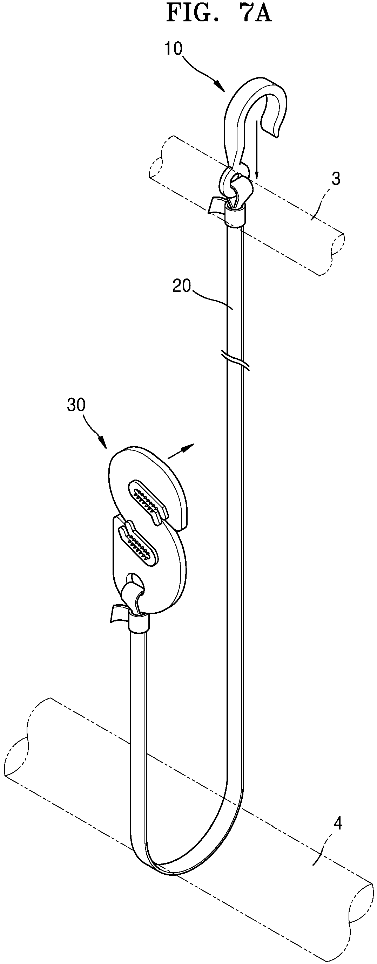

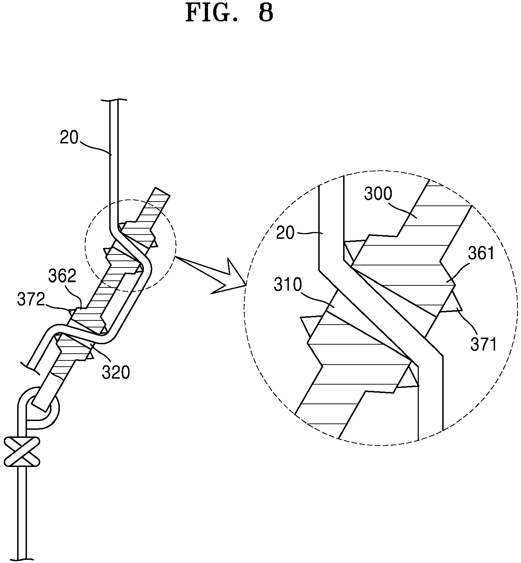

FIGS. 7A to 7C are schematic views for explaining a method of installing the supporting structure 1 for the fruit tree branch according to an embodiment. FIG. 8 is a side view for explaining a use state of the length adjusting member 30 according to an embodiment.

First, as shown in FIG. 7A, the branch hooking member 10 may be hooked on the side branch 3 to be supported among branches of a fruit tree. At this time, the fixing protrusion 13 of the branch hooking member 10 may be fixedly mounted on the surface of the side branch 3 by pressing the upper outer side of the branch hooking member 10 downward, and thus the branch hooking member 10 may be firmly fixed without slipping from the side branch 3. Then, another side of the supporting strap 20 having one end bounded to the branch hooking member 10 may be moved along the circumference of the main branch 4 located at the upper or lower portion of the side branch 3, and then the supporting strap 20 may be wound so as to be in contact with only half of the circumference of the main branch 4.

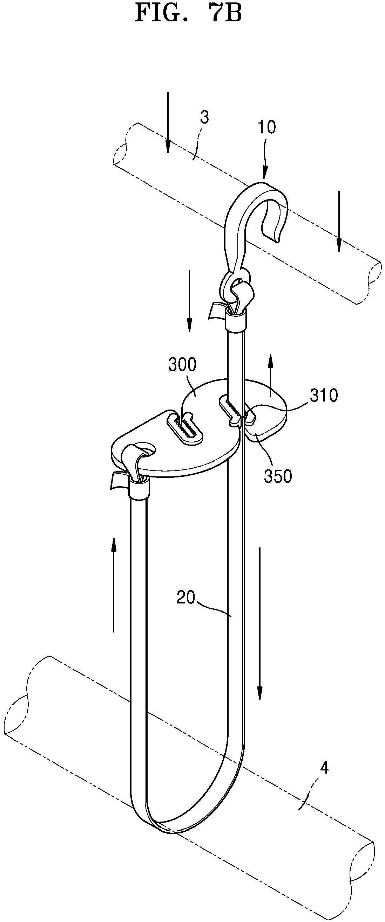

Then, as shown in FIG. 7B, a part of the supporting strap 20 may be combined with the first receiver 310 included in the length adjusting member 30. At this time, the supporting strap 20 may pass through the stepper 350 by using external force by a user. The supporting strap 20 passing through the stepper 350 may be moved along the first inserter 330 and received in the first receiver 310. Next, a worker may hold the length adjusting member 30 by his/her hand to place the supporting strap 20 and the length adjusting member 30 at right angles such that the supporting strap 20 and the first receiver 310 of the length adjusting member 30 may be aligned in a straight line along the longitudinal direction of the supporting strap 20. The length of the supporting strap 20 may be adjusted by moving the length adjusting member 30 upward or downward along the longitudinal direction of the supporting strap 20. The length of the supporting strap 20 may be adjusted such that the side branch 3 hooked by the branch hooking member 10 bound to one side of the supporting strap 20 may also be moved and bent upward or downward.

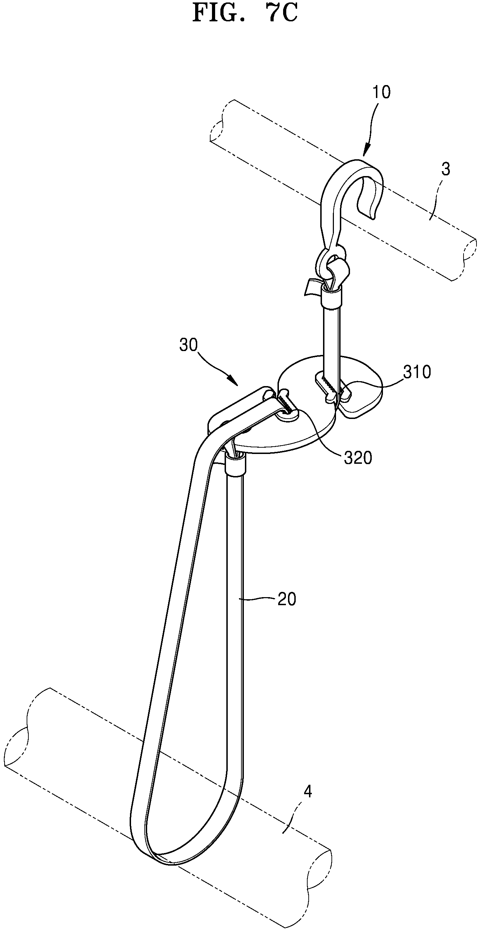

Then, as shown in FIG. 7C, when the side branch 3 is bent to a predetermined position, another part of the supporting strap 20 different from the part of the supporting strap 20 received in the first receiver 310 may be combined with the second receiver 320 included in the length adjusting member 30. At this time, the second direction M₂ in which the second inserter 340 extends may be provided to face the first direction M₁ in which the first inserter 330 extends, and accordingly, the supporting strap 20 may be received in the first receiver 310 and the second receiver 320 so as to intersect with each other in different directions. Therefore, the user may insert the supporting strap 20 into the first receiver 310 and the second receiver 320 more easily.

Then, when the user leaves the length adjusting member 30 from his/her hand, and at the same time, as shown in FIG. 6, one side of the length adjusting member 30 bound to another end of the supporting strap 20 may be rotationally moved in the downward direction with the tension of the main branch 4 wound on the supporting strap 20. At this time, the supporting strap support 12 may be combined with the hook 11 to have the predetermined angle α, and thus the branch hooking member 10 may receive tensile force along a vertical direction.

Also, as shown in FIG. 8, a part of the supporting strap 20 received in the first receiver 310 may be bent with respect to the first receiver 310. One surface of the supporting strap 20 provided with a predetermined width may be subjected to pressure by an edge of the first protrusion 361 and accordingly, the length adjusting member 30 may be fixed to the supporting strap 20. At this time, the first engager 371 provided on the first protrusion 361 may apply frictional force in contact with one surface of the supporting strap 20 and accordingly, the length adjusting member 30 may be more strongly fixed to the supporting strap 20.

Also, another part of the supporting strap 20 received in the second receiver 320 may be bent with respect to the second receiver 320. One surface of the supporting strap 20 provided with the predetermined width may be subjected to additional pressure by an edge of the second protrusion 362 and accordingly, the length adjusting member 30 may be more strongly fixed to the supporting strap 20. At this time, the second engager 372 provided on the second protrusion 362 may apply frictional force in contact with one surface of the supporting strap 20 and accordingly, the length adjusting member 30 may be more strongly fixed to the supporting strap 20, thereby completing a supporting operation of the side branch 3.

As seen in the above-described embodiment, even when load due to the side branch 3 increases by providing two inserters in which the supporting strap 20 is combined by being inserted into the length adjusting member 30 and combing the supporting strap 20 and the length adjusting member 30 with each other twice, the supporting strap 20 may be prevented from easily slipping or escaping from the length adjusting member 30, thereby fixing the side branch 3 to a wanted position. Accordingly, the side branch 3 may be maintained at a proper angle or distances between the side branches 3 may be adjusted, thereby maintaining a spatial balance between the side branches 3 with fruit of the fruit tree 2.

Also, in the above embodiment, the side branch 3 and the main branch 4 of the fruit tree 2 may be supported by using the supporting strap 20 having a predetermined width or more, thereby preventing the side branch 3 and the main branch 4 of the fruit tree 2 from being damaged by the supporting strap 20.

Also, since anyone may easily do a branch supporting work, the workability may be improved and the labor costs may be reduced, and the branch hooking member 10 may not damage the side branch 3 or interfere with the flow of the sap, the supporting strap 20 may be easily disassembled and recovered as well as may be reusable. Also, since the length adjusting member 30 adjusting the length of the supporting strap 20 may easily adjust again to be long or short while moving in the longitudinal direction of the supporting strap 20 in a state where the length adjusting member 30 is combined with the supporting strap 20, the angle at which the side branch 3 is bent may be frequently modified in accordance with various condition changes, thereby promoting the growth of the fruit tree 2 and cultivating large and high quality fruit.

In the above-described embodiment, even when load due to the side branch 3 increases by providing two inserters in which the supporting strap 20 is combined by being inserted into the length adjusting member 30 and combing the supporting strap 20 and the length adjusting member 30 twice, the supporting strap 20 may be prevented from easily slipping or escaping from the length adjusting member 30, thereby fixing the side branch 3 to a wanted position. However, according to a type of the fruit tree 2 in which the supporting structure 1 for the fruit tree branch, and the quantity and maturity of fruit, the weight and the load of branches of the fruit tree 2 may be increased. In the following embodiment, a supporting structure for a fruit tree branch in which three or more inserters in which the supporting strap 20 is combined by being inserted into the length adjusting member 30 and the supporting strap 20 and the length adjusting member 30 are combined with each other three or more times for even when the weight and the load of branches of the fruit tree 2 are increased will now be described.

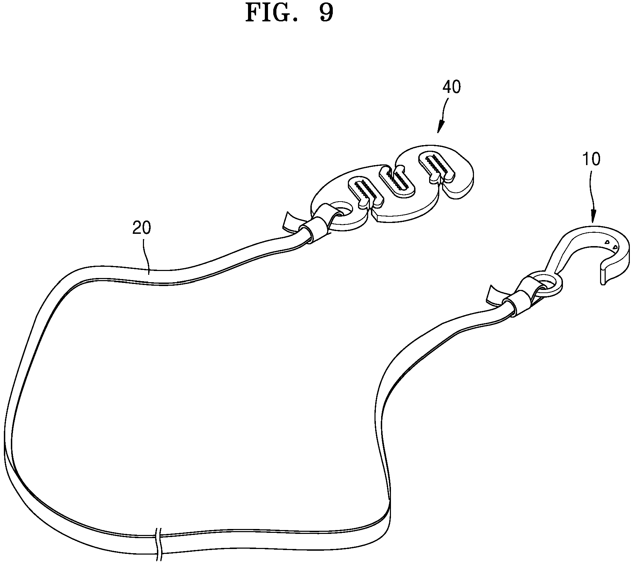

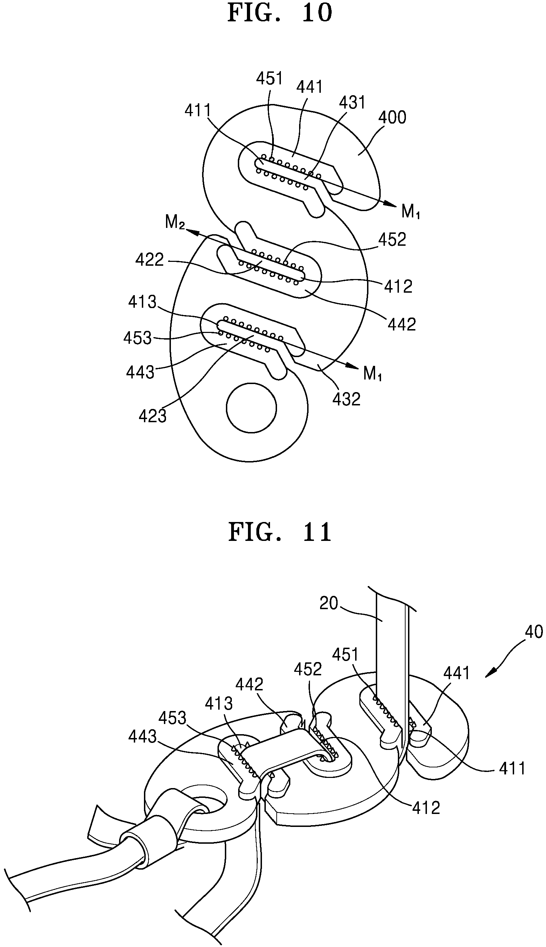

FIG. 9 is a perspective view of a supporting structure for a fruit tree branch according to another embodiment. FIG. 10 is a plan view of a length adjusting member 40 according to another embodiment. FIG. 11 is a schematic view for explaining a use state of the length adjusting member 40 according to another embodiment.

The branch hooking member 10 and the supporting strap 20 according to the present embodiment are substantially the same as the branch hooking member 10 and the supporting strap 20 described with reference to FIGS. 1 to 8, and therefore, the descriptions thereof will be omitted here for convenience of description.

Referring to FIGS. 9 to 11, the length adjusting member 40 according to an embodiment may include a body 400 in the shape of a plate, three or more receivers, e.g., first through third receivers 411 to 413, in which the supporting strap 20 is received, three or more inserters, e.g., first to third inserters 421 to 423, corresponding to paths in which the supporting strap 20 is inserted.

In the present embodiment, the first receiver 411 and the third receiver 413 may extend along the same direction, and the second receiver 412 may extend along a different direction. Also, the first inserter 421 and the third inserter 423 may extend in the same direction, for example, in the first direction M₁, and the second inserter 422 may extend in the second direction M₂ opposite to the first direction M₁. Accordingly, different parts of the supporting strap 20 may be received in the first receiver 411, the second receiver 412 and the third receiver 413. Thus, the supporting strap 20 may be received in the first to third receivers 411 to 413 in such a manner that the first direction M₁, the second direction M₂ and the first direction M₁ intersect with each other and may be combined with the length adjusting member 40.

Also, steppers 431 and 432 may be provided at one end of the first inserter 421 and the third inserter 423 extending in the first direction M₁ to prevent the supporting strap 20 from escaping. Also, the first to third receivers 411 to 413 may be provided with first to third protrusions 441 to 443 and first to third engagers 451 to 453, respectively, for fixing a position of the supporting strap 20. Fixing of the supporting strap 20 to the length adjusting member 30 using protrusions and engagers is the same as that described in the above embodiment, and therefore, a description thereof is omitted here.

As described above, even when load due to the side branch 3 increases by providing three or more receivers and combining the supporting strap 20 and the length adjusting member 40 three or more times, the supporting strap 20 may be prevented from easily slipping or escaping from the length adjusting member 40, thereby fixing the side branch 3 to a wanted position. Also, a user may select combination of the supporting strap 20 and the length adjusting member 40 less than three times according to a degree of the load due to the side branch 3, thereby increasing the user convenience of the supporting structure for the fruit tree branch according to a state of a fruit tree.

According to the present disclosure, even when load due to a side branch increases by providing a plurality of inserters in which a supporting strap is combined by being inserted into a length adjusting member and combing the supporting strap and the length adjusting member with each other multiple times, the supporting strap may be prevented from easily slipping or escaping from the length adjusting member, thereby fixing the side branch to a wanted position. Accordingly, the side branch may be maintained at a proper angle or distances between side branches may be adjusted, thereby maintaining a spatial balance between the side branches with fruit of a fruit tree.

Further, according to the present disclosure, the side face of the fruit tree may be supported by using the supporting strap having a predetermined width or more, thereby preventing the side branch from being damaged by the supporting strap.

Also, since anyone may easily do a branch supporting work, the workability may be improved and the labor costs may be reduced, and a branch hooking member may not damage the side branch or interfere with the flow of the sap, the supporting strap may be easily disassembled and recovered from branches as well as may be reusable.

Also, since the length adjusting member adjusting the length of the supporting strap may easily adjust again to be long or short while moving in the longitudinal direction of the supporting strap in a state where the length adjusting member is combined with the supporting strap, the angle at which the side branch is bent may be frequently modified in accordance with various condition changes, thereby promoting the growth of the fruit tree and cultivating large and high quality fruit.

It should be understood that embodiments described herein should be considered in a descriptive sense only and not for purposes of limitation. Descriptions of features or aspects within each embodiment should typically be considered as available for other similar features or aspects in other embodiments.
While one or more embodiments have been described with reference to the figures, it will be understood by those of ordinary skill in the art that various changes in form and details may be made therein without departing from the spirit and scope of the disclosure as defined by the following claims.

## Claims

1. A supporting structure for a fruit tree branch, the supporting structure comprising:
a branch hooking member detachably supported on a side branch to be supported among branches of a fruit tree;
a supporting strap having one end fixed to the branch hooking member, wound around a main branch among the branches of the fruit tree, and having a predetermined width; and
a length adjusting member having one end fixed to another end of the supporting strap and combined with the supporting strap, and movable along a longitudinal direction of the supporting strap,
wherein the length adjusting member comprises:
a body having a plate-like form and extending along a direction;
a first receiver provided in the body and configured to receive a portion of the supporting strap;
a second receiver provided in the body, spaced apart from the first receiver by a predetermined distance, and configured to receive another portion of the supporting strap;
a first inserter extending along a first direction, through which the portion of the supporting strap is inserted into the first receiver; and
a second inserter extending along a second direction different from the first direction, through which the other portion of the supporting strap to be inserted into the second receiver.

2. The supporting structure of claim 1, wherein the first direction in which the first inserter extends and the second direction in which the second inserter extends are opposite to each other.

3. The supporting structure of claim 1 or 2, further comprising: a stepper provided at one end of the first inserter and configured to prevent a portion of the supporting strap from escaping from the first inserter.

4. The supporting structure of any one of the preceding claims, further comprising:
a first protrusion provided along a longitudinal direction of the first receiver and protruding along a thickness direction of the body; and
a second protrusion provided along a longitudinal direction of the second receiver and protruding along the thickness direction of the body.

5. The supporting structure of claim 4, further comprising:
one or more first engagers provided on an upper portion of the first protrusion along a longitudinal direction of the first protrusion and protruding along the thickness direction of the body; and
one or more second engagers provided on an upper portion of the second protrusion along a longitudinal direction of the second protrusion and protruding along the thickness direction of the body.

6. The supporting structure of claim 4 or 5, wherein a width of the supporting strap is 5 mm or more.

7. The supporting structure of any one of the preceding claims,
wherein the first direction has an angle of 100 degrees or more and 150 degrees or less, in a clockwise direction, with respect to an extension direction of the body, and
wherein the second direction has an angle of 30 degrees or more and 80 degrees or less, in a counterclockwise direction, with respect to the extension direction of the body.

8. The supporting structure of any one of the preceding claims, wherein the branch hooking member comprises:
a hook supported on the side branch; and
a supporting strap support extending along a direction and having one end combined with one end of the hook, wherein one end of the supporting strap is fixed to the supporting strap support,
wherein the supporting strap support is combined with the hook at a predetermined angle.

9. The supporting structure of claim 8, further comprising: one or more fixing protrusions provided on the hook and configured to fix the hook onto the side branch.

10. A supporting structure for a fruit tree branch, comprising:
a branch hooking member detachably supported on a side branch to be supported among branches of a fruit tree;
a supporting strap having one end fixed to the branch hooking member, wound around a main branch among the branches of the fruit tree, and having a predetermined width; and
a length adjusting member having one end fixed to another end of the supporting strap and combined with the supporting strap, and movable along a longitudinal direction of the supporting strap,
wherein the length adjusting member comprises:
a body having a plate-like form and extending along a direction;
three or more receivers spaced apart from each other at a center of the body and configured to receive different portions of the supporting strap; and
three or more inserters extending along a direction, wherein the different portions of the supporting strap are respectively inserted into the three or more inserters.

11. The supporting structure of claim 10, further comprising: a plurality of steppers respectively provided at the three or more inserters and configured to prevent the different portions of the supporting strap from escaping from the three or more inserters.

12. The supporting structure of claim 10 or 11, further comprising: a plurality of protrusions respectively provided at the three or more receivers, extending along a longitudinal direction of the three or more receivers and protruding along a thickness direction of the body.

13. The supporting structure of claim 12, further comprising: a plurality of engagers provided on upper portions of the plurality of protrusions along a longitudinal direction of the plurality of protrusions and protruding along the thickness direction of the body.

14. The supporting structure of claim 12 or 13, wherein a width of the supporting strap is 5 mm or more.
